# EUROPÄISCHE PATENTANMELDUNG

(11) **EP 4 273 467 A1**
(43) Veröffentlichungstag der Anmeldung: **08.11.2023**
(21) Anmeldenummer: 23161128.6
(22) Anmeldetag: 10.03.2023
(51) Int. Cl.: F24S 25/70, F24S 25/10, H02S 20/20

(54) **BEFESTIGUNGSVORRICHTUNG**

(30) Priorität: 06.05.2022 DE 102022111375
(71) Anmelder: SL Rack GmbH, 83527 Haag (DE)
(72) Erfinder: Schletter, Ludwig, 83527 Haag i. OB (DE); Hurmer, Richard, 94562 Oberpöring (DE); Bauer, Georg, 83527 Haag i. OB (DE); Achatz, Florian, 94259 Kirchberg i.W. (DE)
(74) Vertreter: Lichtnecker, Markus Christoph

(57) **Zusammenfassung**

Die Erfindung betrifft eine Befestigungsvorrichtung zur Befestigung eines Solarpanels und/oder eines Photovoltaikmoduls, aufweisend eine erste Tragvorrichtung, die an einer ersten Lagerung befestigbar ist, eine zweite Tragvorrichtung, die an einer zweiten Lagerung befestigbar ist, und eine Haltevorrichtung mit wenigstens einem Befestigungsmittel für zumindest eine Modulklemme, wobei die Haltevorrichtung relativ zur ersten Tragvorrichtung und/oder zweiten Tragvorrichtung verstellbar ist.

## Beschreibung

Die Erfindung betrifft eine Befestigungsvorrichtung zur Befestigung eines Solarpanels und/oder eines Photovoltaikmoduls auf einem Dach, aufweisend eine Haltevorrichtung mit wenigstens einem Befestigungsmittel für zumindest eine Modulklemme.

Derartige Befestigungsvorrichtungen sind grundsätzlich bekannt. Beispielsweise kommen diese bei Flachdächern zum Einsatz, bei denen Solarpanele und/oder Photovoltaikmodule aufgeständert werden, z.B. in Ost-West-Richtung oder Süd-Richtung.

Bisher sind die Modulklemmen hierbei an den jeweils kurzen Seiten der Solarpanele und/oder Photovoltaikmodule angeordnet.

Dies kann unter statischen Gesichtspunkten nachteilig sein. Gerade bei größeren Solarpanelen und/oder Photovoltaikmodulen können dabei Vorgaben bezüglich Wind- und/oder Schneelasten nicht immer eingehalten werden.

Es ist daher eine Aufgabe der Erfindung, eine Befestigungsvorrichtung sowie ein Verfahren zur Befestigung eines Solarpanels und/oder eines Photovoltaikmoduls zu schaffen, welche/s hohen statischen Anforderungen gerecht wird.

Die Lösung dieser Aufgabe erfolgt durch den Gegenstand sowie das Verfahren der unabhängigen Ansprüche.

Erfindungsgemäß ist die Befestigungsvorrichtung zur Befestigung eines Solarpanels und/oder eines Photovoltaikmoduls, z.B. auf einem Dach, vorzugsweise Flachdach, ausgebildet und/oder kann hierfür verwendet werden.

Die Befestigungsvorrichtung weist eine erste Tragvorrichtung auf, die an einer ersten Lagerung befestigbar ist. Im montierten Zustand ist die erste Tragvorrichtung an der ersten Lagerung befestigt.

Die Befestigungsvorrichtung weist eine zweite Tragvorrichtung auf, die an einer zweiten Lagerung befestigbar ist. Im montierten Zustand ist die zweite Tragvorrichtung an der zweiten Lagerung befestigt.

Vorzugsweise können die erste Lagerung und die zweite Lagerung baugleich ausgebildet sein.

Bei der ersten und/oder zweiten Lagerung kann vorzugsweise auf herkömmliche Lagerungen zurückgegriffen werden.

Beispielsweise kann die erste und/oder zweite Lagerung einen Anschlag für das Solarpanel und/oder das Photovoltaikmodul aufweisen. Dies ermöglicht eine einfache und/oder exakte Positionierung.

Die Lagerungen können zum Beispiel an Dachbefestigungsvorrichtungen befestigt sein. Bei den Dachbefestigungsvorrichtungen kann es sich beispielsweise um parallel zueinander angeordnete Schienen handeln. Die Dachbefestigungsvorrichtungen können z.B. auf einem Dach, vorzugsweise Flachdach, befestigt werden.

Vorzugsweise kann die Befestigungsvorrichtung die erste und/oder zweite Lagerung aufweisen. Hierbei ist die erste und/oder zweite Lagerung ein Bestandteil der Befestigungsvorrichtung. Alternativ kann es sich bei der ersten und/oder zweiten Lagerung jedoch auch um separate Bauteile handeln.

Die Befestigungsvorrichtung weist eine Haltevorrichtung mit wenigstens oder genau einem Befestigungsmittel für zumindest oder genau eine Modulklemme auf.

Die erste Tragvorrichtung, die zweite Tragvorrichtung und/oder die Haltevorrichtung kann vorzugsweise plattenförmig und/oder rechteckförmig ausgebildet sein oder zumindest einen plattenförmigen und/oder rechteckförmigen Abschnitt aufweisen.

Beispielsweise kann die erste Tragvorrichtung, die zweite Tragvorrichtung und/oder die Haltevorrichtung ein Metallmaterial, z.B. Aluminium, umfassen oder daraus bestehen.

Die Modulklemme kann zum Beispiel im und/oder am Befestigungsmittel in der gewünschten Position fixiert werden, z.B. mittels einer Steck-, Klemm- und/oder Schraubverbindung.

Die Modulklemme kann das Solarpanel und/oder das Photovoltaikmodul niederhalten und/oder an der Befestigungsvorrichtung festklemmen. Dies ermöglicht einen sicheren Halt.

Beispielsweise können mehrere, z.B. wenigstens oder genau zwei, drei, vier, fünf, sechs, sieben, acht, neun oder zehn, Modulklemmen vorgesehen sein.

Vorzugsweise kann die Befestigungsvorrichtung die Modulklemme aufweisen. Hierbei ist die Modulklemme ein Bestandteil der Befestigungsvorrichtung, beispielsweise der Haltevorrichtung. Alternativ kann es sich bei der Modulklemme jedoch auch um ein separates Bauteil handeln.

Erfindungsgemäß ist die Haltevorrichtung relativ zur ersten Tragvorrichtung und/oder zweiten Tragvorrichtung verstellbar.

Die Befestigungsvorrichtung ist somit quasi teleskopierbar. Beispielsweise bildet die Befestigungsvorrichtung einen Adapter bzw. ein Zwischenstück zwischen den beiden Lagerungen.

Dadurch wird eine variable Anpassung ermöglicht. Beispielsweise können verschieden große Solarpanele und/oder Photovoltaikmodule befestigt werden. Die Breite eines Solarpanels und/oder Photovoltaikmoduls kann zum Beispiel zwischen 1 m und 3 m, z.B. 1,64 m oder 2,38 m, betragen.

Die erfindungsgemäße Befestigungsvorrichtung kann auch bei unterschiedlichen Abständen der Dachbefestigungsvorrichtungen eingesetzt werden.

Bei den weiteren Bauteilen kann zur Montage vorzugsweise zumindest weitgehend auf Standardbauteile zurückgegriffen werden.

Dadurch, dass die Haltevorrichtung relativ zur ersten Tragvorrichtung und/oder zweiten Tragvorrichtung verstellbar ist, kann eine Montage der Solarpanele und/oder Photovoltaikmodule an den gewünschten und/oder vom Hersteller bzw. Gesetzgeber geforderten Fixierpunkten, z.B. Viertelpunkten, erfolgen.

So können die Solarpanele und/oder Photovoltaikmodule beispielsweise konform mit einer Installationsanleitung befestigt werden. Vorgaben bezüglich der Wind- und/oder Schneelast können somit auf einfache Weise eingehalten werden.

Die Befestigungsvorrichtung wird daher hohen statischen Anforderungen gerecht.

Weiterbildungen der Erfindung sind auch den abhängigen Ansprüchen, der Beschreibung sowie den beigefügten Zeichnungen zu entnehmen.

Gemäß einer Ausführungsform ist das Befestigungsmittel als Kanal ausgebildet.

Der Kanal ist vorzugsweise gerade. Beispielsweise kann sich der Kanal über die gesamte Länge der Haltevorrichtung erstrecken.

Dadurch, dass das Befestigungsmittel als Kanal ausgebildet ist, ist ein vielseitiger Einsatz möglich. Die Modulklemme kann vorzugsweise an einer beliebigen Position im Kanal befestigt werden.

Vorzugsweise ist wenigstens oder genau ein Kanal vorgesehen. Beispielsweise können wenigstens oder genau zwei, drei oder vier, vorzugsweise parallele, Kanäle für die Modulklemme vorgesehen sein.

Bevorzugt sind zwei parallele, vorzugsweise zueinander achsensymmetrische, Kanäle vorgesehen. Die Orientierung der Haltevorrichtung spielt zum Beispiel keine Rolle, was eine schnelle und/oder einfache Montage ermöglicht.

Der Kanal kann auch für ein Kabelmanagement genutzt werden. So kann ein Kabel auf einfache Weise innerhalb des Kanals verlegt werden.

Nach einer weiteren Ausführungsform ist die Haltevorrichtung relativ zur ersten Tragvorrichtung und/oder zweiten Tragvorrichtung in axialer Richtung verstellbar.

Vorzugsweise kann die Verstellung lediglich in axialer Richtung erfolgen.

Durch die Verstellbarkeit in axialer Richtung kann die Gesamtlänge der Befestigungsvorrichtung verändert werden. Dies ermöglicht beispielsweise eine Anpassung an unterschiedlich große Solarpanele und/oder Photovoltaikmodule bzw. an die gegebene Örtlichkeit.

Gemäß einer weiteren Ausführungsform steht die Haltevorrichtung mit der ersten Tragvorrichtung und/oder zweiten Tragvorrichtung in Eingriff.

Die Bauteile sind vorzugsweise ineinander gesteckt.

Beispielsweise kann die erste Tragvorrichtung und/oder die zweite Tragvorrichtung die Haltevorrichtung, vorzugsweise beidseitig, umgreifen. Alternativ ist auch der umgekehrte Fall denkbar. So kann z.B. die Haltevorrichtung die erste Tragvorrichtung und/oder die zweite Tragvorrichtung umgreifen.

Nach einer weiteren Ausführungsform ist die Haltevorrichtung mit der ersten Tragvorrichtung und/oder zweiten Tragvorrichtung über eine Kulissenführung verbindbar oder verbunden.

Dies ermöglicht eine sichere Führung beim Verstellen der Haltevorrichtung.

Die erste Tragvorrichtung und/oder die zweite Tragvorrichtung kann hierbei wenigstens eine Nut, vorzugsweise zwei Nuten, aufweisen.

Die wenigstens eine Nut der ersten Tragvorrichtung und/oder der zweiten Tragvorrichtung kann sich vorzugsweise über die gesamte Länge der ersten Tragvorrichtung und/oder der zweiten Tragvorrichtung erstrecken.

Die Haltevorrichtung kann beispielsweise wenigstens einen Kulissenstein, vorzugsweise zwei Kulissensteine, aufweisen.

Der wenigstens eine Kulissenstein kann sich vorzugsweise über die gesamte Länge der Haltevorrichtung erstrecken.

Die, vorzugsweise beidseitigen, Kulissensteine der Haltevorrichtung können beispielsweise in die, vorzugsweise beidseitigen, Nuten der ersten und/oder zweiten Tragvorrichtung eingreifen.

Nach einer weiteren Ausführungsform ist die erste Lagerung mit der ersten Tragvorrichtung und/oder die zweite Lagerung mit der zweiten Tragvorrichtung über eine Kulissenführung verbindbar oder verbunden.

Dies ermöglicht einen sicheren Halt an den Lagerungen.

Die erste Tragvorrichtung und/oder die zweite Tragvorrichtung kann hierbei wenigstens eine Nut, vorzugsweise zwei Nuten, aufweisen.

Die wenigstens eine Nut der ersten Tragvorrichtung und/oder der zweiten Tragvorrichtung können sich vorzugsweise über die gesamte Länge der ersten Tragvorrichtung und/oder der zweiten Tragvorrichtung erstrecken.

Hierbei kann es sich um dieselbe Nut wie bei der Kulissenführung für die Haltevorrichtung handeln. Die Nut kann somit eine Doppelfunktion erfüllen.

Die erste Lagerung und/oder die zweite Lagerung kann beispielsweise wenigstens einen Kulissenstein, vorzugsweise zwei Kulissensteine, aufweisen.

Der wenigstens eine Kulissenstein kann sich vorzugsweise über die gesamte Länge der jeweiligen Lagerung erstrecken.

Die, vorzugsweise beidseitigen, Kulissensteine der Lagerung können beispielsweise in die, vorzugsweise beidseitigen, Nuten der ersten und/oder zweiten Tragvorrichtung eingreifen.

Gemäß einer weiteren Ausführungsform ist die Haltevorrichtung mit der ersten Tragvorrichtung und/oder zweiten Tragvorrichtung über eine Steck-, Klemm- und/oder Schraubverbindung verbindbar oder verbunden.

So kann die Haltevorrichtung auf einfache Weise an einer gewünschten Position, vorzugsweise stufenlos, fixiert werden.

Alternativ zu einer stufenlosen Fixierung können auch ein oder mehrere Fixierpunkte, beispielsweise Aussparungen, vorgesehen sein.

Nach einer weiteren Ausführungsform ist die erste Lagerung und/oder die zweite Lagerung als Kippgelenk ausgebildet.

Ein Kippgelenk ermöglicht beispielsweise eine spannungsfreie Lagerung des Solarpanels und/oder des Photovoltaikmoduls.

Gemäß einer weiteren Ausführungsform ist eine Kontur der ersten Tragvorrichtung an eine Kontur der ersten Lagerung und/oder der Haltevorrichtung angepasst.

Bei der Kontur kann es sich z.B. um die Geometrie, das Profil und/oder die Form wenigstens eines Abschnitts des entsprechenden Bauteils handeln.

Bevorzugt kann die Kontur der ersten Lagerung der Kontur der Haltvorrichtung entsprechen.

Beispielsweise kann die Kontur der ersten Lagerung und/oder der Haltevorrichtung ein Positiv und die Kontur der ersten Tragvorrichtung ein Negativ bilden.

Nach einer weiteren Ausführungsform ist eine Kontur der zweiten Tragvorrichtung an eine Kontur der zweiten Lagerung und/oder der Haltevorrichtung angepasst.

Bevorzugt kann die Kontur der zweiten Lagerung der Kontur der Haltvorrichtung entsprechen.

Vorzugsweise kann die Kontur der ersten Lagerung der Kontur der zweiten Lagerung entsprechen.

Beispielsweise kann die Kontur der zweiten Lagerung und/oder der Haltevorrichtung ein Positiv und die Kontur der zweiten Tragvorrichtung ein Negativ bilden.

Gemäß einer weiteren Ausführungsform ist die erste Tragvorrichtung mit der ersten Lagerung über eine Steck-, Klemm- und/oder Schraubverbindung verbindbar oder verbunden.

Die erste Tragvorrichtung kann vorzugsweise stufenlos an der ersten Lagerung fixiert werden.

Alternativ zu einer stufenlosen Fixierung können auch ein oder mehrere Fixierpunkte, beispielsweise Aussparungen, vorgesehen sein.

Nach einer weiteren Ausführungsform ist die zweite Tragvorrichtung mit der zweiten Lagerung über eine Steck-, Klemm- und/oder Schraubverbindung verbindbar oder verbunden.

Die zweite Tragvorrichtung kann vorzugsweise stufenlos an der zweiten Lagerung fixiert werden.

Alternativ zu einer stufenlosen Fixierung können ein oder mehrere Fixierpunkte, beispielsweise Aussparungen, vorgesehen sein.

Die Erfindung betrifft auch ein Verfahren zur Befestigung eines Solarpanels und/oder eines Photovoltaikmoduls mit einer erfindungsgemäßen Befestigungsvorrichtung.

Die erste Tragvorrichtung wird an der ersten Lagerung befestigt, z.B. verschraubt.

Die zweite Tragvorrichtung wird an der zweiten Lagerung befestigt, z.B. verschraubt.

Die Haltevorrichtung wird relativ zur ersten Tragvorrichtung und/oder zweiten Tragvorrichtung verstellt.

Anschließend kann die Haltevorrichtung an der gewünschten Position fixiert, z.B. verschraubt, werden.

An der Haltevorrichtung kann wenigstens eine Modulklemme befestigt werden. Durch die Modulklemme kann schließlich das Solarpanel und/oder das Photovoltaikmodul befestig werden.

Alle hier beschriebenen Ausführungsformen und Bauteile der Vorrichtung sind vorzugsweise dazu ausgebildet, nach dem hier beschriebenen Verfahren befestigt zu werden. Ferner können alle hier beschriebenen Ausführungsformen der Vorrichtung sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer ersten Ausführungsform einer erfindungsgemäßen Befestigungsvorrichtung im montierten Zustand,
- Fig. 2: eine Detailansicht der Befestigungsvorrichtung gemäß Fig. 1, und
- Fig. 3: eine Perspektivansicht einer zweiten Ausführungsform einer erfindungsgemäßen Befestigungsvorrichtung.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

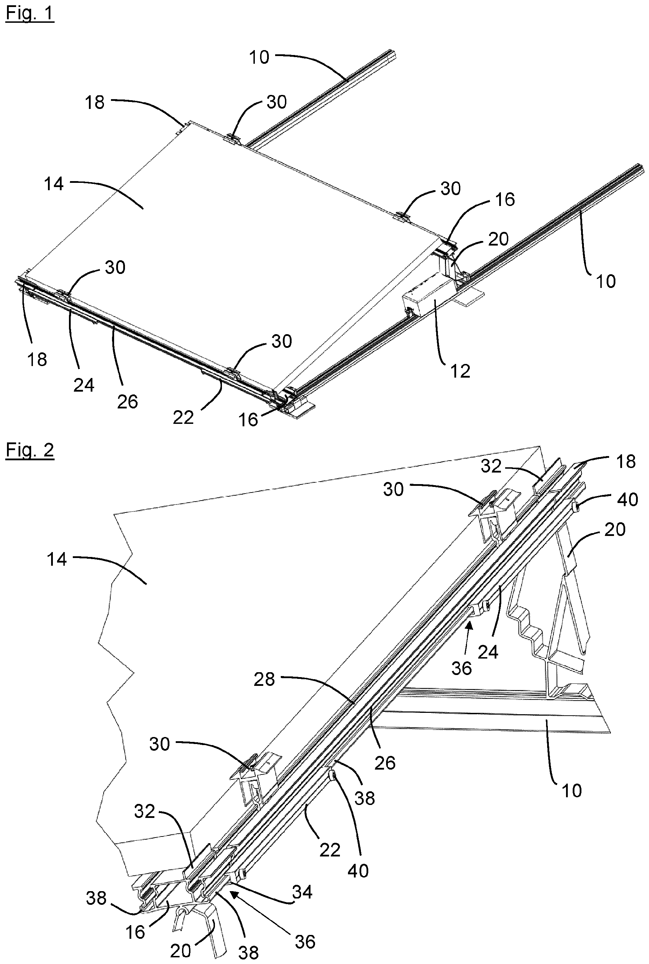

Fig. 1 zeigt zwei parallel zueinander orientierte Dachbefestigungsvorrichtungen 10, welche beispielsweise auf ein Flachdach montiert werden können.

Zum Beschweren kann optional z.B. ein Gewicht 12 vorgesehen sein.

An den Dachbefestigungsvorrichtungen 10 kann ein Solarpanel 14 befestigt werden. Das Solarpanel 14 kann beispielsweise schräg aufgeständert werden.

Hierzu können Lagerungen 16, 18 vorgesehen sein. Die Lagerungen 16, 18 können unmittelbar an den Dachbefestigungsvorrichtungen 10 befestigt werden. Alternativ kann auch ein Ständer 20 zwischengeschaltet sein.

An der vorderen Seite sowie der hochgestellten hinteren Seite kann jeweils eine Befestigungsvorrichtung vorgesehen sein.

Das Solarpanel 14 kann somit an den beiden langen Seiten befestigt werden.

In Fig. 2 ist eine Befestigungsvorrichtung im Detail dargestellt.

Die Befestigungsvorrichtung weist eine erste Tragvorrichtung 22 auf, die an einer ersten Lagerung 16 befestigt ist.

Zudem weist die Befestigungsvorrichtung eine zweite Tragvorrichtung 24 auf, die an einer zweiten Lagerung 18 befestigt ist.

Schließlich weist die Befestigungsvorrichtung eine Haltevorrichtung 26 mit wenigstens einem Befestigungsmittel 28 für zumindest eine Modulklemme 30 auf.

Die Modulklemme 30 kann beispielsweise in das Befestigungsmittel 28 eingesteckt und/oder daran verschraubt werden.

Das Befestigungsmittel kann vorzugsweise als Kanal 28 ausgebildet sein. Die Modulklemme 30 kann daher stufenlos an einer beliebigen Position im Kanal 28 befestigt werden.

Vorzugsweise weist die Haltevorrichtung 26 zwei parallel zueinander orientierte Kanäle 28 auf. Die Orientierung der Haltevorrichtung 26 spielt folglich keine Rolle, da diese beidseitig verwendbar ist.

Der zweite Kanal 28 ist in den Figuren nicht zu sehen, da dieser vom Solarpanel 14 verdeckt wird. Die Haltevorrichtung 26 ist vorzugsweise achsensymmetrisch ausgebildet. Der verdeckte Teil kann somit analog zum sichtbaren Teil ausgebildet sein.

Die Kontur bzw. das Profil der Haltevorrichtung 26 kann der Kontur bzw. dem Profil der Lagerung 16,18 entsprechen. Im Grunde bildet die Haltevorrichtung 26 eine Verlängerung der Lagerungen 16, 18.

Im Gegensatz zu den Lagerungen 16, 18 weist die Haltevorrichtung 26 jedoch keinen Anschlag 32 auf. Der Anschlag 32 der Lagerung 16, 18 dient der Positionierung des Solarpanels 14.

Um auch unterschiedlich große Solarpanele 14 mit der Befestigungsvorrichtung befestigen zu können, ist die Haltevorrichtung 26 relativ zur ersten Tragvorrichtung 22 und/oder zweiten Tragvorrichtung 24 verstellbar.

Die Tragvorrichtungen 22, 24 sind nur teilweise zu sehen. Vorzugsweise sind die Tragvorrichtungen 22, 24 zumindest im Wesentlichen U-förmig ausgebildet und umgreifen jeweils die Unterseite einer Lagerung 16, 18 und/oder der Haltevorrichtung 26.

Die Unterseiten der Tragvorrichtungen 22, 24 sind vorzugsweise plattenförmig. Vorzugsweise sind die Tragvorrichtungen 22, 24 achsensymmetrisch ausgebildet. So können auf beiden Seiten Nuten 34 einer Kulissenführung 36 vorgesehen sein.

Die Lagerungen 16, 18 und/oder die Haltevorrichtung 26 können vorzugsweise Kulissensteine 38 aufweisen, welche mit den Nuten 34 in Eingriff stehen.

Die Befestigungsvorrichtung ist quasi teleskopartig in der Länge verstellbar.

Ist die gewünschte Position erreicht, können die Tragvorrichtungen 22, 24 an der Haltevorrichtung 26, z.B. mittels einer Schraubvorrichtung 40, fixiert werden.

Ferner können die Tragvorrichtungen 22, 24 an den Lagerungen 16, 18, z.B. mittels einer Schraubvorrichtung 40, fixiert werden.

In Fig. 2 ist das Solarpanel 14 relativ klein. Die Haltevorrichtung 26 und die Tragvorrichtungen 22, 24 sind daher ineinander geschoben.

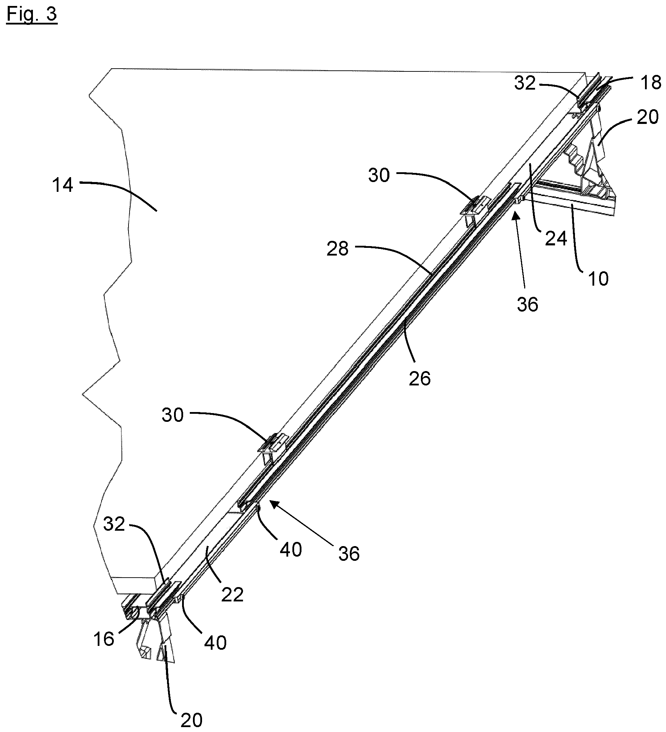

In Fig. 3 ist hingegen ein relativ großes Solarpanel 14 dargestellt. Die Haltevorrichtung 26 und die Tragvorrichtungen 22, 24 sind daher auseinandergezogen.

Die erfindungsgemäße Befestigungsvorrichtung ist somit vielseitig einsetzbar und eignet sich für verschiedenste Solarpanele 14.

### Bezugszeichenliste

- 10: Dachbefestigungsvorrichtung
- 12: Gewicht
- 14: Solarpanel
- 16: erste Lagerung
- 18: zweite Lagerung
- 20: Ständer
- 22: erste Tragvorrichtung
- 24: zweite Tragvorrichtung
- 26: Haltevorrichtung
- 28: Befestigungsmittel, Kanal
- 30: Modulklemme
- 32: Anschlag
- 34: Nut
- 36: Kulissenführung
- 38: Kulissenstein
- 40: Schraubvorrichtung

## Patentansprüche

1. Befestigungsvorrichtung zur Befestigung eines Solarpanels (14) und/oder eines Photovoltaikmoduls, aufweisend
eine erste Tragvorrichtung (22), die an einer ersten Lagerung (16) befestigbar ist,
eine zweite Tragvorrichtung (24), die an einer zweiten Lagerung (18) befestigbar ist, und
eine Haltevorrichtung (26) mit wenigstens einem Befestigungsmittel (28) für zumindest eine Modulklemme (30), wobei die Haltevorrichtung (26) relativ zur ersten Tragvorrichtung (22) und/oder zweiten Tragvorrichtung (24) verstellbar ist.

2. Befestigungsvorrichtung nach Anspruch 1,
**dadurch gekennzeichnet, dass**
das Befestigungsmittel als Kanal (28) ausgebildet ist.

3. Befestigungsvorrichtung nach Anspruch 1 oder 2,
**dadurch gekennzeichnet, dass**
die Haltevorrichtung (26) relativ zur ersten Tragvorrichtung (22) und/oder zweiten Tragvorrichtung (24) in axialer Richtung verstellbar ist.

4. Befestigungsvorrichtung nach einem der vorhergehenden Ansprüche,
**dadurch gekennzeichnet, dass**
die Haltevorrichtung (26) mit der ersten Tragvorrichtung (22) und/oder zweiten Tragvorrichtung (24) in Eingriff steht.

5. Befestigungsvorrichtung nach einem der vorhergehenden Ansprüche,
**dadurch gekennzeichnet, dass**
die Haltevorrichtung (26) mit der ersten Tragvorrichtung (22) und/oder zweiten Tragvorrichtung (24) über eine Kulissenführung (36) verbindbar oder verbunden ist.

6. Befestigungsvorrichtung nach einem der vorhergehenden Ansprüche,
**dadurch gekennzeichnet, dass**
die Haltevorrichtung (26) mit der ersten Tragvorrichtung (22) und/oder zweiten Tragvorrichtung (24) über eine Steck-, Klemm- und/oder Schraubverbindung (40) verbindbar oder verbunden ist.

7. Befestigungsvorrichtung nach einem der vorhergehenden Ansprüche,
**dadurch gekennzeichnet, dass**
die erste Lagerung (16) und/oder die zweite Lagerung (18) als Kippgelenk ausgebildet ist.

8. Befestigungsvorrichtung nach einem der vorhergehenden Ansprüche,
**dadurch gekennzeichnet, dass**
eine Kontur der ersten Tragvorrichtung (22) an eine Kontur der ersten Lagerung (16) angepasst ist und/oder dass eine Kontur der zweiten Tragvorrichtung (24) an eine Kontur der zweiten Lagerung (18) angepasst ist.

9. Befestigungsvorrichtung nach einem der vorhergehenden Ansprüche,
**dadurch gekennzeichnet, dass**
die erste Tragvorrichtung (22) mit der ersten Lagerung (16) über eine Steck-, Klemm- und/oder Schraubverbindung (40) verbindbar ist und/oder dass die zweite Tragvorrichtung (24) mit der zweiten Lagerung (18) über eine Steck-, Klemm- und/oder Schraubverbindung (40) verbindbar oder verbunden ist.

10. Verfahren zur Befestigung eines Solarpanels (14) und/oder eines Photovoltaikmoduls mit einer Befestigungsvorrichtung nach einem der vorhergehenden Ansprüche, bei dem
die erste Tragvorrichtung (22) an der ersten Lagerung (16) befestigt wird, die zweite Tragvorrichtung (24) an der zweiten Lagerung (18) befestigt wird, und
die Haltevorrichtung (26) relativ zur ersten Tragvorrichtung (22) und/oder zweiten Tragvorrichtung (24) verstellt wird.
